Europäisches Patentamt

European Patent Office

Office européen des brevets

(19)

(11)  EP 0 863 595 A2

(12)  EUROPÄISCHE PATENTANMELDUNG

(43) Veröffentlichungstag:
       09.09.1998  Patentblatt 1998/37

(51) Int. Cl.$^6$: **H02G 7/20**, H02G 7/00

(21) Anmeldenummer: 98102630.5

(22) Anmeldetag: 16.02.1998

(84) Benannte Vertragsstaaten:
      AT BE CH DE DK ES FI FR GB GR IE IT LI LU MC
      NL PT SE
      Benannte Erstreckungsstaaten:
      AL LT LV MK RO SI

(30) Priorität: 05.03.1997 DE 19708900

(71) Anmelder: ABB Research Ltd.
      8050 Zürich (CH)

(72) Erfinder:
      • Böhme, Helmut, Prof. Dr.-Ing.
        69226 Nussloch (DE)
      • Paschen, Ralf, Prof. Dr.-Ing.
        76669 Bad Schönborn (DE)
      • Fitterer, Gerd, Dipl.-Ing. (FH)
        68229 Mannheim (DE)

(74) Vertreter:
      Rupprecht, Klaus, Dipl.-Ing. et al
      c/o ABB Patent GmbH,
      Postfach 10 03 51
      68128 Mannheim (DE)

(54)  **Drehstromfreileitung mit in zwei Teilleiter aufgeteilten Phasenleitern**

(57)  Es wird eine Drehstromfreileitung zur Elektro-energieübertragung mit in jeweils ein Teilleiterpaar aufgeteilten Phasenleitern vorgeschlagen, bei der alle Teilleiter ($L_{1a}$, $L_{1b}$, $L_{2a}$, $L_{2b}$, $L_{3a}$, $L_{3b}$) parallel zur zentralen Achse ($P_L$) der Drehstromfreileitung auf der Mantelfläche eines Zylinders angeordnet sind, dessen Achse der zentralen Achse ($P_L$) der Drehstromfreileitung entspricht. Die Verbindungslinien zusammengehöriger Teilleiterpaare verlaufen durch die zentrale Achse ($P_L$) der Drehstromfreileitung. Der Zylinder ist von ellipsenförmigem, im Grenzfall kreisförmigem Querschnitt, wobei das Verhältnis zwischen der Ellipsenachse (b) parallel zur Erdoberkante (EOK) und der Ellipsenachse (c) senkrecht zur Erdoberkante im Bereich 0,25:1 bis 4:1 verläuft. Es ergeben sich Konfigurationen mit wahlweise niedrigem Magnetfeld im Fernbereich, mittleren Bereich und Nahbereich.

Fig. 1

**Beschreibung**

Die Erfindung bezieht sich auf eine Drehstromfreileitung mit in zwei Teilleiter aufgeteilten Phasenleitern gemäß dem Oberbegriff des Anspruchs 1. Unter dem Begriff „in zwei Teilleiter aufgeteilten Phasenleitern" werden dabei sowohl gesplittete Phasenleiter als auch Phasenleiter der beiden Drehstromsysteme einer Doppelleitung verstanden.

Drehstromfreileitungen werden hinsichtlich eines niedrigen Magnetfeldes in der Nähe der Erdoberkante meist derart gestaltet, daß das Magnetfeld unter sowie seitlich neben der Freileitung, d. h. das gesamte Magnetfeldprofil, global niedrig ist. Effektive, allgemein anerkannte Optimierungskriterien für diese Zielstellung lauten, daß die möglichen Maxima des Magnetfeldprofiles minimiert werden oder die magnetische Induktion in einem bestimmten Abstand oder Bereich seitlich von der Leitung zu minimieren ist. Dabei ist der Wert für die maximale Induktion in einer vereinbarten Höhe von beispielsweise 1 m oder 1,8 m oder 2 m oberhalb der Erdoberkante ein allgemein genutzter Parameter für den Vergleich verschiedener Freileitungsausführungen.

In speziellen Einsatzfällen soll das Magnetfeld insbesondere in größerer Entfernung von der Freileitung, in mittlerer Entfernung oder im Nahbereich stark reduziert sein. Derartige spezielle Einsatzfälle sind beispielsweise Schulen, Kindergärten oder Krankenhäuser.

Der Erfindung liegt die Aufgabe zugrunde, Ausführungen für Drehstromfreileitungen mit in zwei Teilleiter aufgeteilten Phasenleitern der eingangs genannten Art anzugeben, die wahlweise in großer, mittlerer oder geringer Entfernung ein stark reduziertes Magnetfeld aufweisen.

Diese Aufgabe wird in Verbindung mit den Merkmalen des Oberbegriffes erfindungsgemäß durch die im Kennzeichen des Anspruches 1 angegebenen Merkmale gelöst.

Die mit der Erfindung erzielbaren Vorteile bestehen insbesondere darin, daß aufgrund von speziellen geometrischen Leiterkonfigurationen eine Überlagerung der Magnetfelder erfolgt, die von den in den einzelnen Leitern fließenden Strömen erzeugt werden. Diese Überlagerung reduziert das auftretende Gesamt-Magnetfeld der Freileitung je nach speziell gewählter Konfiguration in großer, mittlerer oder geringer Entfernung sehr stark. Vorteilhaft können in diesen Bereichen mit reduziertem Magnetfeld Schulen, Kindergärten oder Krankenhäuser vorgesehen werden. Dabei können abschnittsweise längs der Freileitung unterschiedliche Konfigurationen angewendet werden, ohne daß dies große Auswirkungen auf die Gestaltung der Anlagenkomponenten - wie beispielsweise Maste - hat. Ein weiterer Vorteil ist, daß das reduzierte Magnetfeldprofil symmetrisch zu beiden Seiten der Drehstromfreileitung verläuft.

Die Erfindung wird nachstehend anhand der in der Zeichnung dargestellten Ausführungsbeispiele erläutert. Es zeigen:

Fig. 1      eine Leiterkonfiguration im Querschnitt für eine Magnetfeldreduktion in großer Entfernung,

Fig. 2      eine Leiterkonfiguration im Querschnitt für eine Magnetfeldreduktion in mittlerer Entfernung,

Fig. 3, 4      Leiterkonfigurationen im Querschnitt für eine Magnetfeldreduktion in geringer Entfernung.

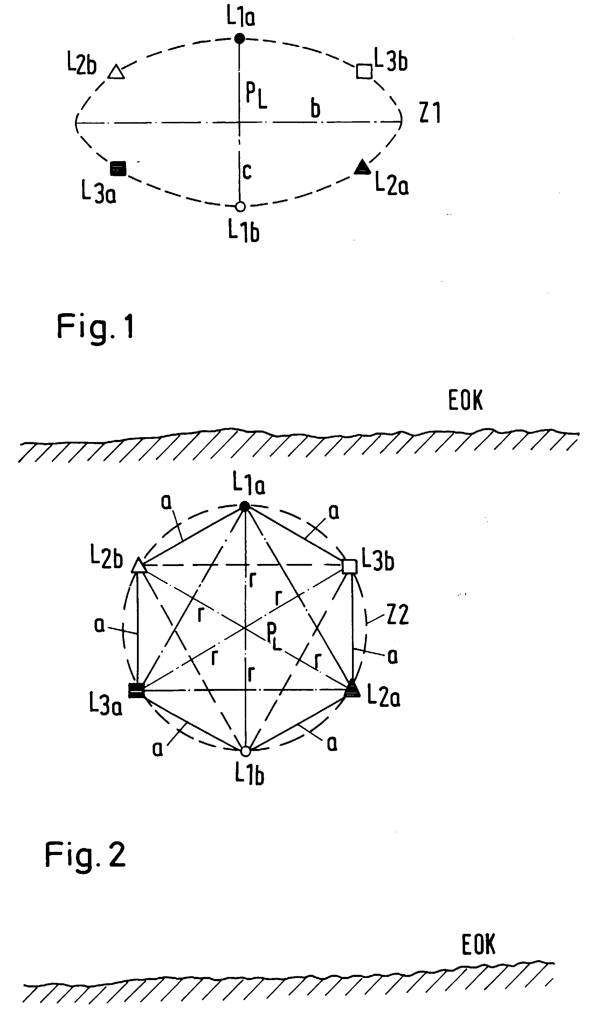

In allen Figuren 1, 2, 3, 4 ist zumindest eine Drehstromfreileitung (mit drei je 120° phasenverschobenen Strömen, wobei Phasenwinkel $\varphi(iR) = 0°$, Phasenwinkel $\varphi(iS) = -120°$, Phasenwinkel $\varphi(iT) = -240°$) mit einem ersten, in zwei Teilleiter $L_{1a}$, $L_{1b}$ aufgeteilten Phasenleiter (beispielsweise Phase R), einem zweiten, in zwei Teilleiter $L_{2a}$, $L_{2b}$ aufgeteilten Phasenleiter (beispielsweise Phase S) sowie einem dritten, in zwei Teilleiter $L_{3a}$, $L_{3b}$ aufgeteilten Phasenleiter (beispielsweise Phase T) zu erkennen. Die Erdoberkante ist stets mit EOK bezeichnet.

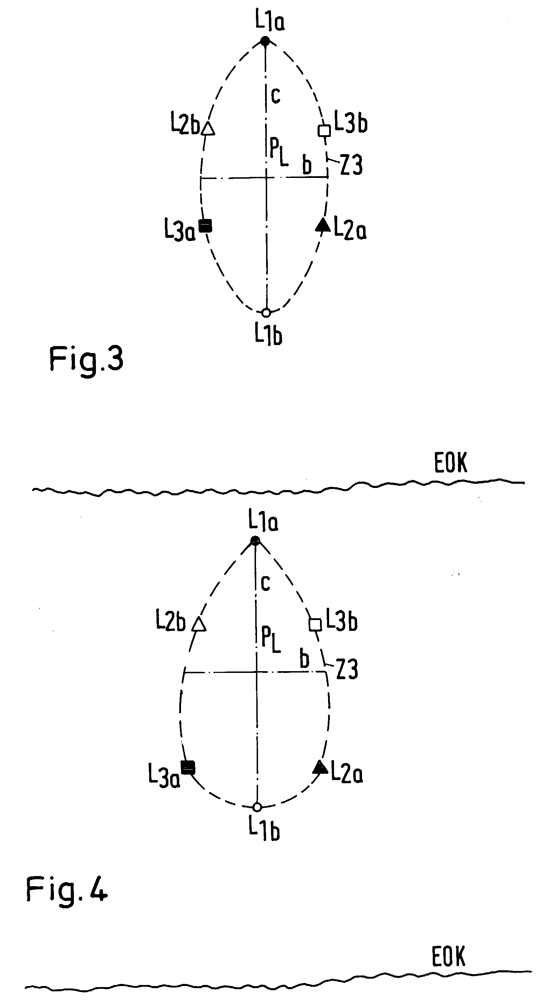

Bei allen Ausführungsvarianten gemäß den Fig. 1, 2, 3, 4 sind die sechs Teilleiter $L_{1a}$, $L_{1b}$, $L_{2a}$, $L_{2b}$, $L_{3a}$, $L_{3b}$ auf dem Mantel eines Zylinders mit elliptischem Querschnitt (im Grenzfall nach Fig. 2 wird der elliptische zum kreisförmigen Querschnitt, im Sonderfall nach Fig. 4 wird der elliptische zum Ei-ähnlichen Querschnitt) ) angeordnet. Die Leiterabstände dürfen in jedem Fall einen isolationsbedingten Mindestwert nicht unterschreiten, wodurch ein Mindest-Leiterabstand festgelegt wird. Durch den Mittelpunkt des Zylinders verläuft die zentrale Achse $P_L$ der Freileitung. Durch Lage und Form der Ellipse wird die magnetische Induktion je nach Zielstellung im Fernbereich, im mittleren Bereich oder im Nahbereich reduziert.

Für die in Fig. 1 gezeigte reduzierte Induktion im Fernbereich der Freileitung ist die Ellipsenachse b parallel zur Erdoberkante EOK größer als die Ellipsenachse c senkrecht zur Erdoberkante. Das Verhältnis b:c verläuft etwa im Bereich 1,5:1 bis 4:1. Beim in Fig. 1 gezeigten Ausführungsbeispiel mit den auf dem Zylinder Z1 angeordneten Teilleitern beträgt das Verhältnis b:c etwa 2:1.

Soll die Induktion im mittleren Bereich, also im Bereich von einigen zehn Metern Abstand von der Freileitung minimiert werden, verläuft das Verhältnis b:c etwa im Bereich 0,8:1 bis 1,5:1. Das Ausführungsbeispiel nach Fig. 2 zeigt für diese Variante den Grenzfall b:c = 1:1, bei dem der elliptische Zylinderquerschnitt in einen kreisförmigen Querschnitt übergeht und alle Teilleiter auf dem Zylinder Z2 mit kreisförmigem Querschnitt angeordnet sind.

Der Abstand zwischen der zentralen Achse $P_L$ der Drehstromfreileitung und jedem der Teilleiter $L_{1a}$, $L_{1b}$, $L_{2a}$, $L_{2b}$, $L_{3a}$, $L_{3b}$ beträgt bei diesem Grenzfall jeweils r (Radius des kreisförmigen Querschnitts). Die Abstände zwischen zwei unmittelbar benachbarten Teilleitern betragen jeweils a.

Merkmal des Grenzfalles nach Fig. 2 ist, daß die aufgeteilten Phasenleiter auf dem Mantel des Zylinders Z2 (Achse des Zylinders = zentrale Achse $P_L$ der Drehstromfreileitung) so liegen, daß die Verbindungslinien zusammengehöriger Teilleiterpaare durch diese zentrale Achse der Drehstromfreileitung $P_L$ verlaufen (die Teilleiter eines aufgeteilten Phasenleiters liegen sich gegenüber). Da alle drei Phasenleiter paarweise aufgeteilt sind, ergibt sich eine Leiterkonfiguration` bei der alle Teilleiter $L_{1a}$, $L_{1b}$, $L_{2a}$, $L_{2b}$, $L_{3a}$, $L_{3b}$ auf dem Mantel des Zylinders Z2 liegen und im Querschnitt ein Sechseck bilden, dessen Seitenlänge (= Leiterabstände) gleich dem Radius ist, d. h. a = r .

Um die Maxima der Induktion unmittelbar unterhalb der Leitung (im Nahbereich) zu minimieren, sind die Leiter auf dem Mantel eines Zylinders mit elliptischem Querschnitt anzuordnen, bei dem die Ellipsenachse b parallel zur Erdoberkante EOK kleiner als die Ellipsenachse c senkrecht zur Erdoberkante ist. Das Verhältnis b:c verläuft etwa im Bereich 0,25:1 bis 0,8:1. Beim in Fig. 3 gezeigten Ausführungsbeispiel mit dem Zylinder Z3 beträgt das Verhältnis b:c etwa 0,5:1.

Eine weitere Reduzierung des Magnetfeldes im Nahbereich ergibt sich bei Verformung der Ellipse zu einem Ei-ähnlichen Querschnitt mit nach oben weisender Spitze, wie dies in Fig. 4 dargestellt ist.

Alle vorstehend behandelten Konfigurationen sind sowohl für eine Einfachleitung (ein Drehstromsystem) mit paarweise gesplitteten Phasenleitern ($L_1$ gesplittet in $L_{1a}$ und $L_{1b}$; $L_2$ gesplittet in $L_{2a}$ und $L_{2b}$; $L_3$ gesplittet in $L_{3a}$, $L_{3b}$) als auch für eine Doppelleitung (zwei Drehstromsysteme A und B, wobei System A die Phasenleiter $L_{1a}$, $L_{2a}$, $L_{3a}$ und System B die Phasenleiter $L_{1b}$, $L_{2b}$, $L_{3b}$ aufweist) gültig, wobei die Teilleiter L1a, L2a und L3a sowie die Teilleiter L1b, L2b und L3b bzw. die beiden Drehstromsysteme A, B mit ihren Leitern je ein Dreieck bilden und die Dreiecke zu einem sechszackigen Stern ineinander verschachtelt sind. Die Teilleiter eines aufgeteilten Phasenleiters bzw. die Leiter mit gleichphasigen Strömen von zwei Drehstromsystemen liegen sich gegenüber. Zur Verdeutlichung sind in der Figur 2 die zu einem

Drehstromsystem gehörigen Leiter mittels Verbindungslinien jeweils zu einem Dreieck verbunden. Das strichpunktierte Dreieck stellt das Drehstromsystem A und das gestrichelte Dreieck stellt das Drehstromsystem B dar.

Bei den vorgeschlagenen Ausführungsformen ist es vorteilhaft, wenn in den Teiletern jeweils gleiche Ströme fließen, d. h. in jedem Teilleiter jeweils die Hälfte des Phasenstromes fließt. Ist dies wegen der elektrischen Unsymmetrie der Leiterkonfigurationen nicht gewährleistet, sind die Teilleiter in bekannter Weise abschnittsweise längs der Leitung zu verkreuzen.

## Patentansprüche

1. Drehstromfreileitung zur Elektroenergieübertragung mit in jeweils ein Teilleiterpaar aufgeteilten Phasenleitern, dadurch gekennzeichnet, daß alle Teilleiter ($L_{1a}$, $L_{1b}$, $L_{2a}$, $L_{2b}$, $L_{3a}$, $L_{3b}$) parallel zur zentralen Achse ($P_L$) der Drehstromfreileitung auf der Mantelfläche eines Zylinders angeordnet sind, dessen Achse der zentralen Achse ($P_L$) der Drehstromfreileitung entspricht, wobei die Verbindungslinien zusammengehöriger Teilleiterpaare durch die zentrale Achse ($P_L$) der Drehstromfreileitung verlaufen, der Zylinder von ellipsenförmigem Querschnitt ist und das Verhältnis zwischen der Ellipsenachse (b) parallel zur Erdoberkante (EOK) und der Ellipsenachse (c) senkrecht zur Erdoberkante im Bereich 0,25:1 bis 4:1 verläuft.

2. Drehstromfreileitung nach Anspruch 1, dadurch gekennzeichnet, daß alle Teilleiter ($L_{1a}$, $L_{1b}$, $L_{2a}$, $L_{2b}$, $L_{3a}$, $L_{3b}$) parallel zur zentralen Achse ($P_L$) der Drehstromfreileitung sechseckförmig auf der Mantelfläche eines Zylinders mit kreisförmigem Querschnitt angeordnet sind, wobei die Abstände (a) benachbarter Teilleiter dem Radius (r) des Zylinders entsprechen.

3. Drehstromfreileitung nach Anspruch 1, gekennzeichnet durch eine Verformung des elliptischen zu einem Ei-ähnlichen Querschnitt mit nach oben weisender Spitze.

4. Drehstromfreileitung nach einem der Ansprüche 1 bis 3, dadurch gekennzeichnet, daß die Teilleiter ($L_{1a}$, $L_{1b}$, $L_{2a}$, $L_{2b}$, $L_{3a}$, $L_{3b}$) paarweise gesplittete Phasenleiter eines Drehstromsystems sind.

5. Drehstromfreileitung nach einem der Ansprüche 1 bis 3, dadurch gekennzeichnet, daß die Teilleiter ($L_{1a}$, $L_{1b}$, $L_{2a}$, $L_{2b}$, $L_{3a}$, $L_{3b}$) Phasenleiter von zwei Drehstromsystemen sind, wobei jeweils einem Teilleiter des ersten Drehstromsystems (A) zwei Teilleiter des zweiten Drehstromsystems (B) benachbart sind.

Fig. 1

Fig. 2

Fig.3

Fig.4